# EUROPEAN PATENT APPLICATION

(11) **EP 1 512 555 A1**
(43) Date of publication of application: **09.03.2005**
(21) Application number: 04018970.6
(22) Date of filing: 10.08.2004
(51) Int. Cl.: B60C 15/00, B60C 9/22, B60C 9/08

(54) **Radial tire for motorcycle**

(30) Priority: 02.09.2003 JP 2003310346
(71) Applicant: SUMITOMO RUBBER INDUSTRIES LIMITED, Kobe-shi, Hyogo-ken (JP)
(72) Inventor: Yuze, Toshifumi c/o Sumitomo Rubber Ind., Ltd., Kobe-shi Hyogo 651-0072 (JP); Tanaka, Takashi c/o Sumitomo Rubber Ind., Ltd., Kobe-shi Hyogo 651-0072 (JP)
(74) Representative: Manitz, Finsterwald & Partner GbR

(57) **Abstract**

Radial tire for a motorcycle comprising a carcass (14) including two carcass plies (16) and (17) with a carcass cord angle of 65 to 88 degrees with respect to the circumferential direction of a tire (10). The carcass ply (16) is wound upon a bead (13) from an inside toward an outside in a radial direction. The carcass ply (16) overlaps symmetrically in a crown portion (18). The carcass plies (16) and (17) are fastened and reinforced in the radial direction by means of a band (15). An overlapping dimension (Wo) of the carcass ply (16) is set to be 30% to 90% of a tread width (W). The carcass ply (17) is extended to have a height (h) along a sidewall (12). The height (h) is set to be 20% of a height (H) of the sidewall (12) or more.

## Description

This application claims priority on Patent Application No. 2003-310346 filed in Japan on September 2, 2003.

### BACKGROUND OF THE INVENTION

### Field of the Invention

The present invention relates to a structure of a radial tire for a motorcycle.

### Description of the Related Art

Some conventional tires for a motorcycle employ a crown overlapping structure. With the crown overlapping structure, a carcass ply constituting the tire overlaps in a tread crown portion. This structure enhances the stiffness of the tread crown portion of the tire (a portion which is always maintained in contact with a ground when the motorcycle carries out straight running). As a result, the straight running stability of the tire can be enhanced, and furthermore, the abrasion resistance of the contact portion of the tire can be improved.

The crown overlapping structure is simple, and the stiffness of the tire can be enhanced comparatively inexpensively and effectively. For this reason, the crown overlapping structure is generally employed for a bias tire for a light duty vehicle mounting a small displacement engine. This has been described in Japanese Patent Publication No. 3-36682, for example.

In recent years, a demand for a heavy duty vehicle mounting a large displacement engine has been increased in the market of a motorcycle. Therefore, a tire for a motorcycle which is suitable for a heavy duty high speed vehicle has variously been developed. Referring to the tire for a heavy duty high speed vehicle, the stiffness of a tread crown portion is to be more maintained, a straight running stability is to be more enhanced and the abrasion resistance of a contact portion is to be more improved as compared with a tire for a light duty vehicle.

### SUMMARY OF THE INVENTION

The present invention has been made in such a background. It is an object of the present invention to provide a radial tire for a motorcycle which is adapted to a heavy duty high speed vehicle and has a high straight running stability and an abrasion resistance in a contact portion. The present inventor considered that a tire is to have a radial structure in order to be resistant to high speed straight running in a state in which a great load is applied and is to have a crown overlapping structure in order to enhance the stiffness of the tire easily and reliably.

(1) In order to attain the object, a radial tire for a motorcycle according to the present invention comprises a tread having an external surface formed like an arch to be outward convex in a radial direction, the external surface constituting a tread surface, a pair of sidewalls extended inward in an almost radial direction from both sides of the tread, a pair of beads extended further inward in the almost radial direction from the sidewalls, and a carcass laid over both of the beads.

The carcass constitutes a laminated member in which a plurality of carcass plies is provided. Each of the carcass plies includes a carcass cord. Each of the carcass plies is provided in such a manner that a direction of the carcass cord is set at an angle of 65 to 88 degrees with respect to a circumferential direction. At least any of the carcass plies which is provided on an outermost layer is wound upon the bead from an inside toward an outside in the radial direction. Both ends of the carcass ply provided on the outermost layer overlap symmetrically in a crown portion of the tread. A. band for fastening and reinforcing the carcass in the almost radial direction is provided between the carcass and the tread.

According to this structure, the carcass plies constituting the carcass are arranged in such a manner that the carcass cord is provided at the angle of 65 to 88 degrees with respect to the circumferential direction of the tire. The carcass is fastened and reinforced in the radial direction by means of the band. Accordingly, the tire has a radial structure which is suitable for high speed straight running in such a state that a great load is applied. Furthermore, any of the carcass plies which is provided on the outermost layer has both ends overlapping in the crown portion of the tread. In particular, therefore, the stiffness of the tread can be enhanced.

(2) It is preferable that a dimension Wo of the overlap should be set to be 30% to 90% of a width W of the tread.

In the case in which the dimension Wo of the overlap is smaller than 30% of the width W of the tread, it is hard to maintain the stiffness of the tread. In the case in which the dimension Wo of the overlap is greater than 90% of the width W of the tread, the rate of a disadvantage that the weight of the tire is increased becomes higher than that of an advantage that the stiffness of the tread is enhanced. The dimension Wo of the overlap is set within the range described above so that an increase in the weight of the tire can be suppressed and the stiffness of the tread can be enhanced effectively.

(3) The carcass plies other than the carcass plies overlapping symmetrically in the crown portion are wound upon the bead from the inside toward the outside in the radial direction. It is preferable that both ends of each of the other carcass plies should be extended to have a height which is 20% of a height of the sidewall or more. Particularly, it is preferable that both ends of each of the other carcass plies should be extended to have a height to be 20% to 90% of the height of the sidewall.

With this structure, in the other carcass plies, the stiffness of the sidewall can be enhanced. Accordingly, the tire has an advantage that a whole stiffness can be enhanced and a running stability can be improved still more.

According to the present invention, a radial tire for a motorcycle having a radial structure and a crown overlapping structure is constituted. Therefore, the tire is adapted to a heavy duty high speed vehicle and has a high straight running stability and an abrasion resistance in a contact portion.

### BRIEF DESCRIPTION OF THE DRAWINGS

Fig. 1 is a sectional view showing the main part of the structure of a tire according to an embodiment of the present invention, and
Fig. 2 is a plan view showing the tire according to the embodiment of the present invention.

### DESCRIPTION OF THE PREFERRED EMBODIMENTS

The present invention will be described below in detail based on a preferred embodiment with reference to the drawings.

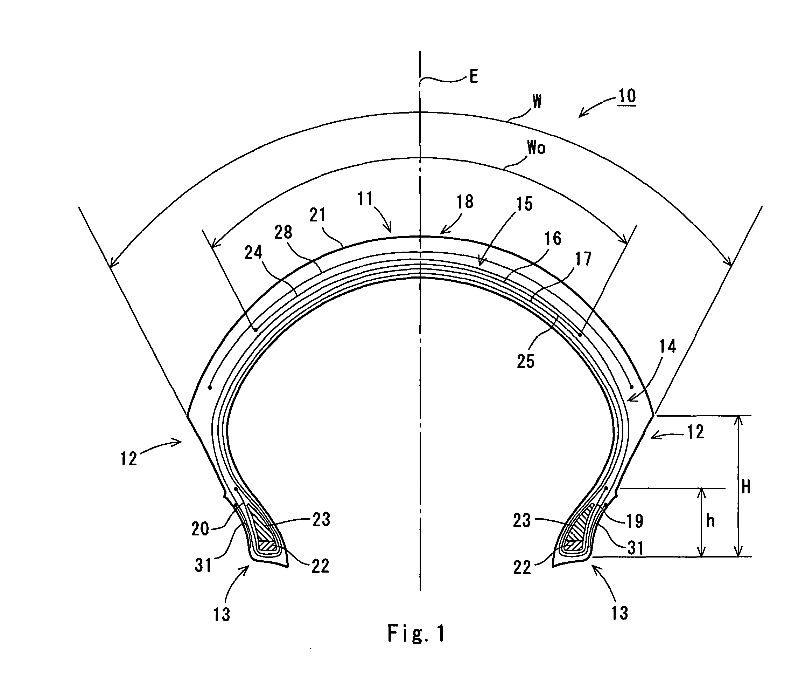

Fig. 1 shows a section taken along a plane which passes through the center of a radial tire (hereinafter referred to as a "tire") 10 according to an embodiment of the present invention and is orthogonal to an equator plane E of the tire 10. In Fig. 1, a vertical direction is set to be a radial direction of the tire 10 and a transverse direction is set to be an axial direction of the tire 10.

The tire 10 is constituted for a motorcycle. The tire 10 takes an almost symmetrical shape about the equator plane E except for a tread pattern. The tire 10 has a tread 11, a sidewall 12, a bead 13, a carcass 14 and a band 15.

The present embodiment features that the tire 10 has a radial structure which will be described below, the carcass 14 has two carcass plies 16 and 17, a carcass cord (not shown) constituting the carcass plies 16 and 17 is provided at an angle of 65 to 88 degrees with respect to the circumferential direction of the tire 10, the carcass ply 16 overlaps in a crown portion 18 of the tread 11, and both ends 19 and 20 of the carcass ply 17 are wound up to the predetermined position of the sidewall 12. The structure of the tire 10 will be described below in more detail.

The tread 11 is formed of a crosslinked rubber. A tread surface 21 is formed like an arch to be outward convex in the radial direction.

When the motorcycle carries out cornering, generally, a driver inclines the motorcycle inward in a cornering direction. At this time, the tire forms a camber angle with a road surface and thus comes in contact with a ground. A camber thrust is generated over the contact surface of the tire in order to oppose to a centrifugal force generated over the motorcycle. The camber thrust realizes the stable cornering of the motorcycle.

The external surface of the tread 11 in the tire 10, that is, the tread surface 21 is formed to draw a large arch as shown in Fig. 1 in order to generate a stable camber thrust. The tread surface 21 comes in contact with the road surface. For this reason, the tread surface 21 is provided with a tread pattern (not shown) having a groove portion and a land portion.

The sidewall 12 is continuously linked to the tread 11 and is extended from both ends of the tread 11 inward in the radial direction. The sidewall 12 is also formed of a crosslinked rubber. The sidewall 12 absorbs a shock from the road surface by a flexure. The sidewall 12 prevents the external damage of the carcass 14.

The bead 13 includes a bead core 22, a bead apex 23 extended from the bead core 22 outward in the radial direction, and a chafer 31. The bead core 22 is formed circularly. The bead core 22 is formed of a plurality of non-extensible wires (typically, wires formed of steel) . The bead apex 23 is formed of a crosslinked rubber. The bead apex 23 is formed like an outward taper in the radial direction.

In the present embodiment, the carcass 14 includes the two carcass plies 16 and 17. These are laminated as shown in Fig. 1. The number of the carcass plies included in the carcass 14 is not restricted at all. It is sufficient that the carcass 14 has a plurality of carcass plies laminated. The carcass plies 16 and 17 are provided along the inner peripheral surfaces of the tread 11, the sidewall 12 and the bead 13, respectively.

The carcass ply 17 provided on an inside has the ends 19 and 20 wound upon the bead core 22 from an inside toward an outside in the axial direction and extended upward (outward in the radial direction). These ends 19 and 20 are extended to have a height h. In the present embodiment, the height h is set to be 50% of a height H of the sidewall 12. The dimension h is preferably set to be 20% of the dimension H or more, and more preferably, 40% to 80% of the dimension H. Functions and advantages obtained by setting the dimension h will be described below.

The dimensions h and H are measured in a state in which the tire 10 is incorporated in a normal rim and is filled with air to have a normal internal pressure. In this specification, the dimension of each portion in the tire 10 is measured in this state.

The normal rim implies a rim determined in a standard system including standards on which the tire 10 depends. "Measuring Rim" in the JATMA standards is the normal rim. Moreover, the normal internal pressure implies an internal pressure determined in a standard system including the standards on which the tire 10 depends. A "maximum air pressure" in the LATMA standards, a "maximum value" described in "TIRE LOAD LIMITS AT VARIOUS PRESSURE" in the TRA standards and "INFLATION PRESSURE" in the ETRTO standards are included in the normal internal pressures.

The carcass ply 16 is provided on the outside of the carcass ply 17 to cover the carcass ply 17. As shown in Fig. 1, the carcass ply 16 is wound upon the bead core 22 from the inside toward the outside in the axial direction in the same manner as the carcass ply 17. The carcass ply 16 is extended to the crown portion 18 along the sidewall 12 and the tread 11 to cover the carcass ply 17

In the present embodiment, an end 24 of the carcass ply 16 is extended to such a position as to get beyond the equator plane E in the crown portion 18. Similarly, the other end 25 of the carcass ply 16 is extended to such a position as to get beyond the equator plane E in the crown portion 18. Accordingly, the carcass plies 16 and 17 overlap in such a manner that the ends 24 and 25 are symmetrical about the equator plane E. In the present embodiment, an overlapping dimension Wo is set to be 70% of a tread width W of the tire 10. The dimension Wo is not restricted to 70% of the dimension W but is set to be 30% to 90% of the dimension W.

In the case in which the carcass 14 further has a large number of carcass plies as described above, it is sufficient that any of the carcass plies which is provided on an outermost layer overlaps in the crown portion 18 in the same manner as the carcass ply 16. It is preferable that the carcass plies other than the carcass ply provided on the outermost layer should have ends extended to have a height which is 20% of the height H of the sidewall 12 or more in the same manner as the carcass ply 17.

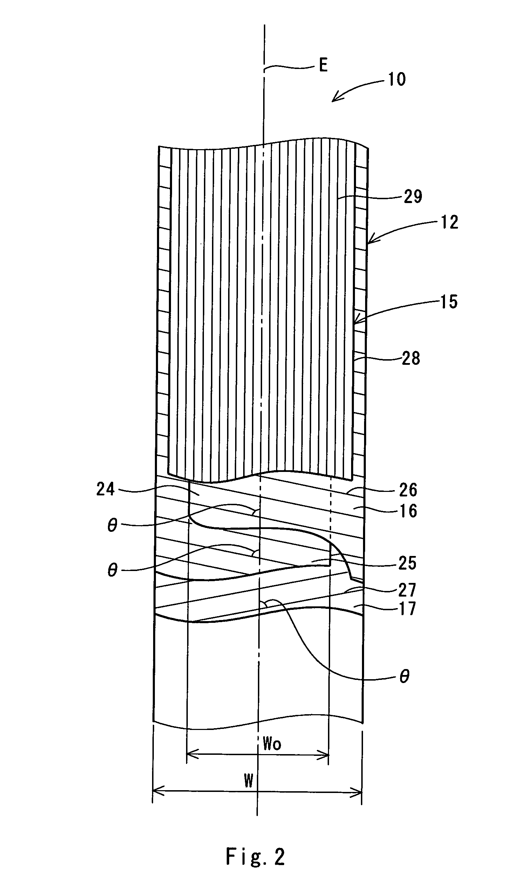

Fig. 2 shows a positional relationship between the carcass plies 16 and 17 and a band ply 26 constituting the band 15.

The carcass plies 16 and 17 are formed by carcass cords 26 and 27, and topping rubbers covering the carcass cords 26 and 27, respectively. The carcass plies 16 and 17 are constituted in a well-known procedure. The carcass cords 26 and 27 are formed of a nylon fiber or the like, for example.

In the present embodiment, the carcass cords 26 and 27 are extended in a direction having an angle θ with respect to the circumferential direction of the tire 10 (that is, the direction of the equator plane E). The angle θ is set to be 75 degrees. Indeed, the angle can be properly set within a range of 65 to 88 degrees. Therefore, the tire 10 according to the present embodiment has a radial structure.

In the present embodiment, the band 15 includes one band ply 28. The band 15 may include a plurality of band plies. The band ply 28 is constituted in a well-known procedure. The band ply 28 has a band cord 29 which is covered with a topping rubber.

The band cord 29 is constituted by an aramid fiber, for example. The band cord 29 is provided in the longitudinal direction of the band ply 28. More specifically, the band cord 29 is provided in the circumferential direction of the tire 10. However, the band cord 29 does not need to be provided in the circumferential direction of the tire 10 but the angle formed by the band cord 29 with respect to the circumferential direction of the tire 10 (that is, the direction of the equator plane E) can be properly set within a range of 0 to 30 degrees, for example.

The band ply 28 is wound upon the outside of the carcass 14 in such a manner that a longitudinal direction thereof is aligned along the circumferential direction of the tire 10. Consequently, the carcass 14 is fastened and reinforced in a radial direction.

As described above, the carcass plies 16 and 17 are provided at the angle θ with respect to the circumferential direction of the tire 10. Therefore, the tire 10 has the radial structure. In addition, the carcass plies 16 and 17 are fastened and reinforced in the radial direction of the tire 10 by means of the band 15. Accordingly, the stiffness of the tread 11 can be enhanced so that the tire 10 is suitable for high speed straight running in a state in which a great load is applied. Furthermore, the both ends 24 and 25 of the carcass ply 16 provided on an outermost side in the radial direction overlap in the crown portion 18 of the tread 11. For this reason, particularly, the stiffness of the tread 11 can be enhanced easily and effectively. As a result, the tire 10 is adapted to a heavy duty high speed motorcycle, and furthermore, has a high straight running property and an abrasion resistance in the contact portion.

In the present embodiment, particularly, the overlapping dimension Wo is set to be 30% to 90% of the tread width W. In the case in which the overlapping dimension Wo is smaller than 30% of the tread width W, the stiffness of the tire 10 cannot be enhanced sufficiently. In the case in which the overlapping dimension Wo is greater than 90% of the tread width W, a disadvantage that the weight of the tire 10 is increased becomes greater than an advantage that the stiffness of the tire 10 is enhanced. In the case in which the overlapping dimension Wo is set within the range described above, a considerable increase in the deadweight of the tire 10 can be suppressed, and furthermore, the stiffness of the tread 11 can be enhanced effectively.

In the present embodiment, furthermore, the carcass ply 17 is wound upon the bead 13 from the inside toward the outside in the radial direction. In addition, the both ends 19 and 20 of the carcass ply 17 are extended to have a height which is 50% of the height H of the sidewall 12. Consequently, the stiffness of the sidewall 12 can be enhanced effectively. Accordingly, the stiffness of the whole tire 10 can be enhanced in balance with an enhancement in the stiffness of the tread 11. The tire 10 is more suitable for a great load and high speed straight running. As a result, a running performance can be improved.

### EXAMPLES

The effects of the present invention will be described below by way of examples. The present invention should not be construed to be restricted based on the description of the examples.

Table 1 shows a result obtained by executing a comparison test for a conventional example (a comparative example) for the performance of a tire according to each of examples 1 and 2 of the present invention.

The size of the tire according to each of the examples and the comparative example is 170/60ZR17. A test vehicle used in the comparison test is a motorcycle which is adapted for 1100 cc on-road use. The comparison test serves to measure the straight running stability of the test vehicle which is running, and the like. The straight running stability and the like are represented by an index. The index is a relative numeric value in the case in which the comparative example is set to be 100 for the following test items. The details of the tire according to each of the examples and the comparative example are as follows.

### [Example 1]

A carcass has a structure of (1 - 0 + COL (crown overlap)). The carcass cord of a carcass ply is formed of a nylon fiber. The carcass cord is covered with a crosslinked rubber. The carcass cord has a thickness of 2100 dtex/2. Two carcass plies are provided. The carcass cords of the carcass plies cross each other at an angle of 80 degrees with respect to the circumferential direction of the tire. The overlapping dimension of the carcass ply is 50% of a tread width. A band has a structure of JLB (jointless band). The band cord of a band ply is formed of an aramid fiber. The band cord is covered with a crosslinked rubber. The band cord has a thickness of 1670 dtex/2. Two band plies are provided. The band cord of each of the band plies is provided to form an angle of 0 degree with respect to the circumferential direction of the tire.

### [Example 2]

A carcass has a structure of (1 - 0 + COL) . The carcass cord of a carcass ply is formed of a nylon fiber. The carcass cord is covered with a crosslinked rubber. The carcass cord has a thickness of 1400 dtex/2. Two carcass plies are provided. The carcass cords of the carcass plies cross each other at an angle of 80 degrees with respect to the circumferential direction of the tire. The overlapping dimension of the carcass ply is 85% of a tread width. A band has a structure of JLB. The band cord of a band ply is formed of an aramid fiber. The band cord is covered with a crosslinked rubber. The band cord has a thickness of 1670 dtex/2. Two band plies are provided. The band cord of each of the band plies is provided to form an angle of 0 degree with respect to the circumferential direction of the tire.

### [Comparative Example]

A carcass has a structure of (3 - 0). A carcass ply does not overlap. The carcass cord of the carcass ply is formed of a nylon fiber. The carcass cord is covered with a crosslinked rubber. The carcass cord has a thickness of 2100 dtex/2. Two carcass plies are provided. The carcass cords of the carcass plies cross each other at an angle of 80 degrees with respect to the circumferential direction of the tire. A band has a structure of JLB. The band cord of a band ply is formed of an aramid fiber. The band cord is covered with a crosslinked rubber. The band cord has a thickness of 1670 dtex/2. Two band plies are provided. The band cord of each of the band plies is provided to form an angle of 0 degree with respect to the circumferential direction of the tire.

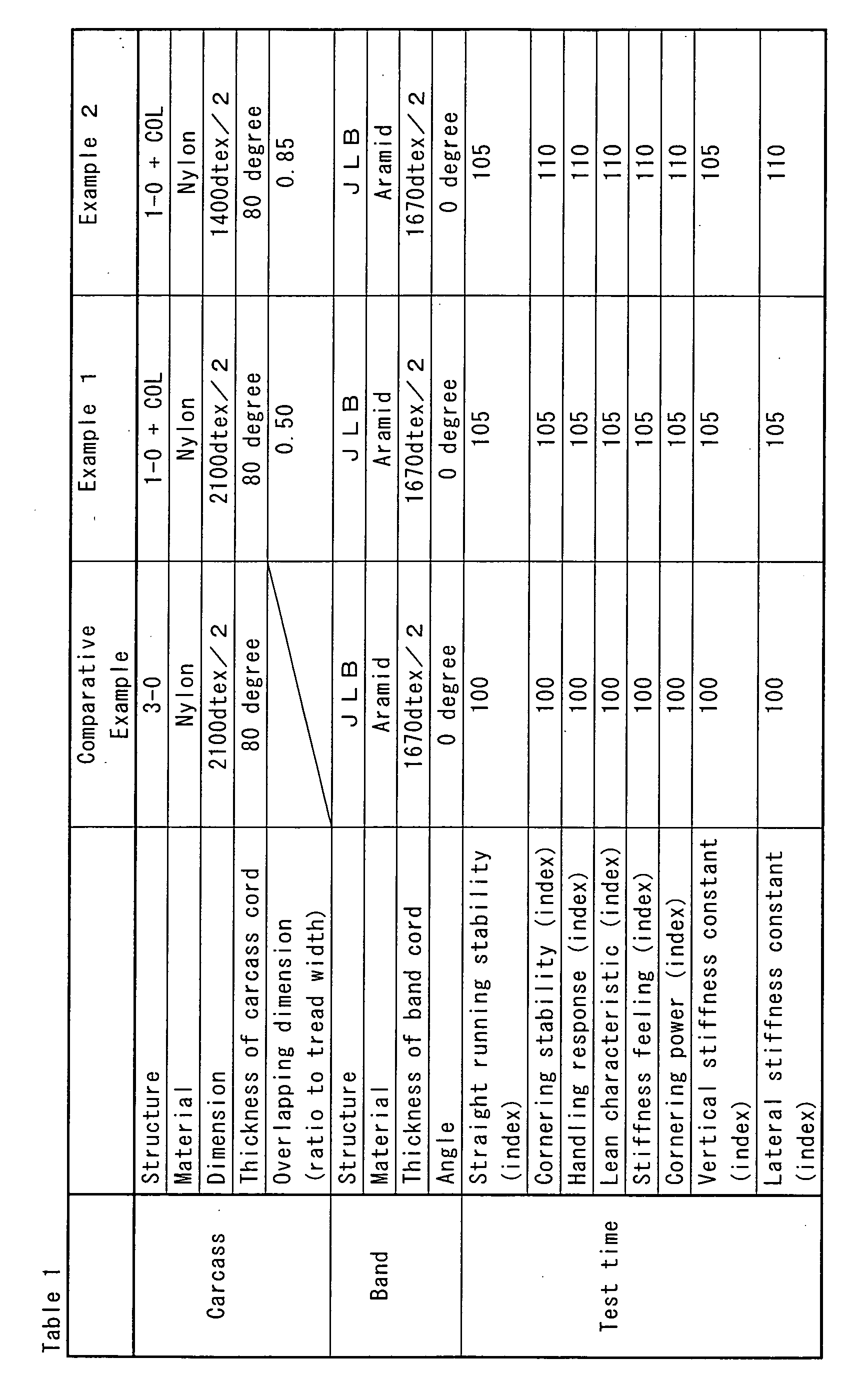

As shown in the Table 1, it was confirmed that a performance is more enhanced by 5% for the straight running stability, the cornering stability, the handling response, the lean characteristic and the stiffness feeling in the tire according to the example 1 as compared with the tire according to the comparative example. Furthermore, it was confirmed that the performance is more enhanced by 5% for the cornering power, the vertical stiffness constant and the lateral stiffness constant in the tire according to the example 1 as compared with the tire according to the comparative example.

Moreover, it was confirmed that a performance is more enhanced by 5% for the straight running stability and 10% for the cornering stability, the handling response, the lean characteristic and the stiffness feeling in the tire according to the example 2 as compared with the tire according to the comparative example. Furthermore, it was confirmed that the performance is more enhanced by 5% for the vertical stiffness constant and 10% for the cornering power and the lateral stiffness constant in the tire according to the example 2 as compared with the tire according to the comparative example.

## Claims

1. A radial tire for a motorcycle comprising:
a tread having an external surface formed like an arch to be outward convex in a radial direction, the external surface constituting a tread surface;
a pair of sidewalls extended inward in an almost radial direction from both sides of the tread;
a pair of beads extended further inward in the almost radial direction from the sidewalls; and
a carcass laid over both of the beads,
wherein the carcass constitutes a laminated member in which a plurality of carcass plies including a carcass cord is provided,
each of the carcass plies is provided in such a manner that a direction of the carcass cord is set at an angle of 65 to 88 degrees with respect to a circumferential direction,
at least any of the carcass plies which is provided on an outermost layer is wound upon the bead from an inside toward an outside in the radial direction, and both ends thereof overlap symmetrically in a crown portion of the tread, and
a band for fastening and reinforcing the carcass in the almost radial direction is provided between the carcass and the tread.

2. The radial tire for a motorcycle according to claim 1, wherein a dimension Wo of the overlap is set to be 30% to 90% of a width W of the tread.

3. The radial tire for a motorcycle according to claim 1 or 2, wherein the carcass plies other than the carcass plies overlapping symmetrically in the crown portion are wound upon the bead from the inside toward the outside in the radial direction, and both ends thereof are extended to have a height which is 20% of a height of the sidewall or more.
